# EUROPÄISCHE PATENTSCHRIFT

(11) **EP 3 805 325 B1**
(45) Veröffentlichungstag und Bekanntmachung des Hinweises auf die Patenterteilung: **27.11.2024**
(21) Anmeldenummer: 20190448.9
(22) Anmeldetag: 07.12.2016
(51) Int. Cl.: C09D 17/00, C09D 5/00

(54) **WÄSSRIGE ZUSAMMENSETZUNG FÜR EIN ABTÖNSYSTEM, KIT-OF-PARTS ABTÖNSYSTEM, ABGETÖNTE ANSTRICH- UND PUTZSYSTEME SOWIE ANSTRICHE UND PUTZE ERHÄLTLICH DURCH AUFTRAGEN DER ABGETÖNTEN ANSTRICH- BZW. PUTZSYSTEME**
AQUEOUS COMPOSITION FOR A TINTING SYSTEM, KIT-OF-PARTS TINTING SYSTEM, TINTED PAINT AND PLASTER SYSTEMS AND PAINTS AND PLASTERS OBTAINABLE BY APPLYING THE TINTED PAINT OR PLASTER SYSTEMS
COMPOSITION AQUEUSE POUR UN SYSTÈME DE NUANÇAGE, ENSEMBLE DE PIÈCES DU SYSTÈME DE NUANÇAGE, SYSTÈMES D'ENDUIT OU DE PEINTURE NUANCÉS AINSI QUE PEINTURES ET ENDUITS OBTENUS PAR APPLICATION DES SYSTÈMES D'ENDUIT OU DE PEINTURE NUANCÉS

(43) Veröffentlichungstag der Anmeldung: 14.04.2021
(62) Teilanmeldung aus: 16202727.0
(73) Patentinhaber: DAW SE, 64372 Ober-Ramstadt (DE)
(72) Erfinder: Brenner, Thomas, 64367 Mühltal (DE); Ptatschek, Volker, 63773 Goldbach (DE); Befurt, Uwe, 64372 Ober-Ramstadt (DE); Gengenbach, Patrick, 64380 Roßdorf (DE); Richter, Maike, 64372 Ober-Ramstadt (DE); Wischhusen, York, 64354 Reinheim (DE); Meder, Michael, 64367 Mühltal (DE); Schmidt, Patrick, 63741 Aschaffenburg (DE)
(74) Vertreter: Metten, Karl-Heinz

(56) Entgegenhaltungen:
- EP-A1- 1 491 600
- EP-A1- 1 990 366
- WO-A1-00/63313
- WO-A1-2005/058992
- WO-A1-2015/130501
- WO-A1-2017/144694
- DE-A1- 102007 011 553

## Beschreibung

Die vorliegende Erfindung betrifft eine wässrige Zusammensetzung für ein Abtönsystem, Kit-of-parts Abtönsysteme, abgetönte Anstrich- und Putzsysteme sowie Anstriche und Putze erhältlich durch Auftragen der abgetönten Anstrich- bzw. Putzsysteme. Des Weiteren betrifft die Erfindung ein Verfahren zum Abtönen einer Farbtonzusammensetzung sowie die Verwendung der erfindungsgemäßen Abtönsysteme für die Herstellung abgetönter Anstrich- oder Putzsysteme.

Anstrichfarben sowie gefärbte Putze können heutzutage dem Anwender in vielfältigsten Farbschattierungen zur Verfügung gestellt werden. Dies geschieht regelmäßig nicht dadurch, dass man unterschiedlichste Farbschattierungen in größeren Mengen bevorratet. Vielmehr arbeitet man häufig mit einer Palette an sogenannten Abtönpasten, die mit einer sogenannten Abtönbasis, welche regelmäßig in weißer oder transparenter oder bunter Form vorliegt, vermengt werden. Hierbei stellen diese Abtönbasen im Allgemeinen den mengenmäßig größten Anteil der genannten Mischungen dar. Für die Farbeinstellung gewünschter Anstrichfarben bedient man sich heute softwaregesteuerter Abtönmaschinen, in denen eine Vielzahl an Abtönpasten unterschiedlicher Farbe vorliegt. Sobald eine solche Abtönpaste in eine derartige Abtönmaschine eingefüllt wird, besteht in besonderem Maße die Gefahr der Schimmelbildung und des Bakterienbefalls. Denn einerseits kommen in Abtönpasten üblicherweise vielfältigste organische Verbindungen zum Einsatz und andererseits sind in der Umgebungsluft Schimmelsporen und Bakterien regelmäßig ubiquitär vorhanden. Insbesondere bei solchen Abtönpasten, die für Farbtöne verwendet werden, die z.B. nicht im Trend liegen und demgemäß über eine längere Verweilzeit in der Abtönmaschine verfügen, kann es dazu kommen, dass größere Mengen an Abtönpastenmaterial auf Grund von Schimmelbefall entsorgt und die Abtönmaschine komplett gereinigt werden muss. Aus diesem Grund werden Abtönpasten organische Biozide zugemischt. Durch diesen Zusatz an Bioziden kann die Schimmelbildung weitgehend zurückgedrängt werden, allerdings kann dies zu raumlufthygienischen Problemen führen. Dass trotz des Einsatzes von Bioziden mitunter sogar verschärft Schimmelbefall beobachtet wird, ist dem Umstand geschuldet, dass die heutigen Abtönsysteme sowie die daraus resultierenden Beschichtungen vielfach emissions- und lösemittelfrei, d.h. mit VOC-Gehalten < 1g/Liter rezeptiert werden.

Die WO 2015/130501 offenbart eine Beschichtungszusammensetzung, umfassend ein kettenverlängertes Aspartat-Präpolymer, mindestens ein Polyisocyanat, mindestens ein Härtungsmittel mit freien Isocyanatgruppen und mindestens einen UV-Absorber bestehend aus Oxanilid, Benzotriazol oder entsprechenden Derivaten (Patentanspruch 1). Die Beschichtungszusammensetzungen gemäß D1 finden Einsatz in Grundierungen und Klarlacken für die Beschichtung von Fahrzeugen, beispielsweise zum Schutz gegen Abrieb, Chemikalien, Korrosion, Hitze oder mechanische Einflüsse.

Die EP 1491 600 A1 beschreibt ein Verfahren zum Lagern einer kationisch polymerisierbaren Zusammensetzung, umfassend ein säurebildendes Mittel, eine kationisch polymerisierbare Verbindung und Wasser. Die kationisch polymerisierbare Zusammensetzung wird dabei in einen wasserundurchlässigen Behälter eingebracht, wobei der Wassergehalt in der kationisch polymerisierbaren Zusammensetzung auf einem Niveau von mindestens 0,2 Gew.-%, bezogen auf das Gesamtgewicht der kationisch polymerisierbaren Zusammensetzung, gehalten wird. Dieses Verfahren kommt bei niedrigviskosen Tintenstrahldruckfarben bzw. Ink-jet-Tinten oder Flexodruckfarben zum Einsatz.

Die WO 2005/058992 beschreibt ein Verfahren zur Herstellung von wässrigen Primärdispersionen von polymerumhüllten Pigmenten, bei dem wenigstens ein mehrwertiges Isocyanat, wenigstens eine Verbindung mit speziellen Isocyanat-reaktiven Gruppen, Pigmente, Wasser und gegebenenfalls eine oberflächenaktive Substanz miteinander umgesetzt werden. Die nach diesem Verfahren erhaltenen Dispersionen sollen als Pigmentpasten zum Kolorieren von Textil und Leder, als Druckpasten für Textildruckverfahren oder als Tinten für das Ink-Jet-Verfahren geeignet sein.

Aus der DE 10 2007 011 553 A1 geht ein Verfahren zur Beschichtung bzw. Vorbehandlung von metallischen Oberflächen mit einer wässrigen Zusammensetzung hervor, enthaltend einen organischen Filmbildner aus mindestens einem Kunstharz, mindestens einen langkettigen Alkohol, mindestens einen Vernetzer, mindestens ein Gleitmittel sowie mindestens eine Substanz auf Basis von Silan, Silanol oder/und Siloxan oder eine anorganische Verbindung in Partikelform mit einem mittleren Partikeldurchmesser im Bereich von 0,005 bis 0,3 µm und gegebenenfalls einen organischen Korrosionsinhibitor, ein organisches Lösemittel oder/und mindestens ein Additiv. Dieses Verfahren soll im Bereich der Beschichtung von metallischen Drähten, Stahlbändern, Blechen und Karosserieteilen Einsatz finden.

Die EP 1 990 366 A1 offenbart eine härtbare Organopolysiloxanzusammensetzung, welche auf die Oberfläche eines Epoxidharz-Korrosionsschutzbeschichtungsfilms laminiert werden soll, um einen verbesserten Antifouling-Beschichtungsfilm bilden soll (Zusammenfassung). Die Zusammensetzung kann dabei aus zwei oder drei flüssigen Komponenten gebildet werden, wobei darin mindestens ein Organopolysiloxan mit mindestens zwei kondensationsreaktiven Gruppen, Siliciumdioxid, ein Organosilan und/oder ein Teilhydrolysat davon sowie eine spezielle, eine Zinnverbindung enthaltende Härtungsbeschleunigerkomponente enthalten sind.

Und die WO 00/63313 stellt ab auf eine wässrige Beschichtungszusammensetzung umfassend ein silanolfunktionalisiertes Harz und einen teilchenförmigen nicht filmbildenden Feststoff, wobei das silanolfunktionalisierte Harz in Form einer sauren wässrigen Lösung vorliegt und genügend Silanolgruppen enthält, damit das Harz vernetzen kann. Die Beschichtungszusammensetzung sollen Beschichtungen liefern mit einer Pigment-Volumen-Konzentration im Bereich von 75 bis 90 %. Diese Beschichtungen sollen eine erhöhte Opazität und gute Abriebfestigkeit aufweisen.

Der vorliegenden Erfindung lag daher die Aufgabe zugrunde, auf Abtönmassen zurückgreifen zu können, die nicht mit den Nachteilen des Stands der Technik behaftet sind und die insbesondere konservierungsmittelfrei verwendet werden können, ohne den Befall mit Schimmel oder Bakterien über einen längeren Zeitraum befürchten zu müssen.

Demgemäß wurde eine wässrige Zusammensetzung, insbesondere Farbtonzusammensetzung oder Extenderzusammensetzung, für ein Abtönsystem gefunden, enthaltend oder bestehend aus
a) mindestens einem Pigment und/oder mindestens einem Füllstoff,
b) mindestens einem Netz- und/oder Dispergiermittel,
c) mindestens einem Feuchthaltemittel, insbesondere Polyalkylenglykole, und/oder mindestens einem Wachs, insbesondere zugegeben in Form einer wässrigen Wachsemulsion,
d) mindestens einem Alkylalkoxysilan, Alkylalkoxysiloxan, wasserlöslichem Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon,
e) Aminverbindungen und
f) gegebenenfalls mindestens einem ersten Additiv,
wobei die wässrige Zusammensetzung, insbesondere die Farbtonzusammensetzung, einen pH-Wert größer oder gleich 9,0, vorzugsweise im Bereich von 10,0 bis 12,0 und besonders bevorzugt im Bereich von 10,5 bis 11,5, aufweist oder auf einen pH-Wert größer oder gleich 9,0, vorzugsweise im Bereich von 10,0 bis 12,0 und besonders bevorzugt im Bereich von 10,5 bis 11,5 eingestellt ist.

Exemplarisch seien als geeignete Pigmente anorganische Pigmente wie Bunt-, Schwarz- und Weißpigmente (Farbpigmente) sowie Glanzpigmente und organische Pigmente wie Bunt- und Schwarzpigmente genannt.

Als geeignete anorganische Weißpigmente kommen zum Beispiel Titandioxid, Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat.

Besonders geeignete Pigmente umfassen zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Als geeignete organischen Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Grundsätzlich können geeignete Füllstoffe ausgewählt werden aus der Gruppe bestehend aus calcitischen Füllstoffen, insbesondere Calciumcarbonate, Dolomite, Calcite und/oder Aragonite, silikatischen Füllstoffen, insbesondere Quarzite, Schichtsilikate, Feldspate, Vulkanite und/oder Kieselerden wie Kieselgur und Diatomeenerden, sulfatischen Füllstoffen, insbesondere Bariumsulfat, chemisch modifizierten Füllstoffen und aus beliebigen Mischungen dieser Füllstoffe. Werden Schichtsilikate als Füllstoffe eingesetzt, handelt es sich hierbei in der Regel um solche, in die Wasser unter Normaldruck- und Raumtemperaturbedingungen nicht oder nicht in signifikanten Mengen eingelagert wird und die demgemäß nicht als Verdicker fungieren können.

Geeignete Alkylsilikonate umfassen z.B. Verbindungen der Formel HO-[Si(R³)(OX)-O-]ₙH, worin der Rest R³ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als bevorzugte Alkylsilikonate Kaliummethylsilikonat und Natriumpropylsilikonat genannt. Als besonders vorteilhaft hat sich hier Kaliummethylsilikonat erwiesen. Der Trockenanteil an Alkylsilikonaten wie Kaliummethylsilikonaten in der erfindungsgemäßen Zusammensetzung liegt regelmäßig im Bereich von 0,01 bis 5 Gew.-%, vorzugsweise 0,1 bis 2 Gew.-% und besonders bevorzugt 0,2 bis 1 Gew.-% (Feststoffanteil bzw., sofern bei 20°C nicht als Feststoff vorliegend, die nicht-wässrigen Wirkstoffanteile).

Als Additive (hier erste Additive genannt zwecks Abgrenzung gegenüber den nachfolgend als zweite Additive eingeführten Additiven) können grundsätzlich herkömmliche Additive, wie sie für wässrige Abtönpasten verwendet werden, eingesetzt werden. Exemplarisch können geeignete erste Additive ausgewählt sein aus der Gruppe bestehend aus Entschäumern, Stabilisatoren, Flammschutzmitteln, Hydrophobierungsmitteln, Mattierungsmitteln, insbesondere Fällungskieselsäure, Rheologieadditiven, insbesondere Verdickern, Oberflächenadditiven, insbesondere Silikonoberflächenadditiven, beispielsweise polyethermodifiziertes Polymethylalkylsiloxan und/oder Silikonpolyether-Copolymere, Puffersubstanzen, Neutralisationsmittel, pH-Regulatoren, UV-Absorbern, Radikalfängern und Mischungen dieser Verbindungen. Die erfindungsgemäßen wässrigen Zusammensetzungen enthalten als Additive vorzugsweise mindestens einen Verdicker und/oder einen Entschäumer. Besonders bevorzugt liegen in den erfindungsgemäßen wässrigen Zusammensetzungen sowohl Verdicker wie auch Entschäumer vor. Unter Verdicker im Sinne der vorliegenden Erfindung sollen auch rheologiebeeinflussende Schichtsilikate, organisch modifizierte Schichtsilikaten, zum Beispiel Bentonite oder Hectorite, pyrogene Kieselsäure, zum Beispiel Aerosile, und thixotrope Alkydharze verstanden werden. Diese Substanzen können einzeln wie auch in einer beliebigen Mischung als Verdicker eingesetzt werden. Unter rheologiebeeinflussende Schichtsilikate im Sinne der vorliegenden Erfindung sollen solche Schichtsilikate verstanden werden, bei denen Wasser in die Schichtsilikate eingelagert werden kann und die aufgrund dieser Eigenschaft als Verdicker fungieren können. Die genannten rheologiebeeinflussenden Schichtsilikate und die organisch modifizierten Schichtsilikate können auch unter der Bezeichnung Schichtsilikat-Verdicker zusammengefasst werden.

Die genannten ersten Additive liegen in einer bevorzugten Ausgestaltung in den erfindungsgemäßen wässrigen Zusammensetzungen in einer Menge im Bereich von 0,001 bis 5 Gew.-%, vorzugsweise im Bereich von 0,01 bis 3,5 Gew.-% und besonders bevorzugt im Bereich von 0,1 bis 2,5 Gew.-% vor, jeweils bezogen auf den Feststoffanteil bzw., sofern diese Additive bei Raumtemperatur nicht als Feststoff vorliegen sollten, auf den nicht-wässrigen Wirkstoffanteil dieser Additivkomponenten.

Geeignete Verdicker können ferner ausgewählt werden aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickern, Polysaccharid-Verdickern, insbesondere Xanthan und/oder Agar Agar, und beliebigen Mischungen hiervon. Besonders bevorzugt wird auf Polysacharid-Verdicker, insbesondere Xanthan, zurückgegriffen.

Geeignete Verdickersysteme können z.B. auch auf der kombinierten Verwendung von rheologiebeeinflussenden Schichtsilikaten und/oder organisch modifizierten Schichtsilikaten, insbesondere organisch modifizierten Schichtsilikaten, und Polysacharidverdickern, insbesondere Xanthan, basieren.

Für die Netz- und oder Dispergiermittel der erfindungsgemäßen wässrigen Zusammensetzung greift man vorzugsweise auf solche zurück, die ausgewählt sind aus der Gruppe bestehend aus Polycarboxylaten, insbesondere Salze von Polyacrylsäuren, Polyphosphaten, insbesondere lineare Polyphosphate und/oder zyklische Metaphosphate, Polyetherphosphaten, Polycarbonsäurepolymeren, Acrylblockcopolymeren, insbesondere CFRP-basierten Acrylblockcopolymeren, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxan, Alkindiolethoxylaten, Fluortensiden und beliebigen Mischungen hiervon. Besonders bevorzugt unter den geeigneten Netz- und Dispergiermitteln sind Polyetherphosphate, Kaliumsalze von Polycarbonsäurepolymeren, CFRP-basierte Acrylblockcopolymere, ethoxylierte Fettalkohole und/oder nichtionische gesättigte langkettige Alkohole. CFRP-basierte Acrylblockpolymere sind dabei solche, die mittels *Controlled Free Radical Polymerisation* hergestellt worden sind. Gegenüber der konventionellen radikalischen Polymerisation handelt es sich bei dem CFRP-Verfahren um eine sogenannte lebende Polymerisation, auch bekannt als *Living Radical Polymerisation* (LRP). Herbei können radikale reversibel geformt werden, und zwar sowohl auf der Stufe der Initiierung der Radikalbildung wie auch bei nachfolgenden Propagationsschritten erfolgen.

Die erfindungsgemäßen wässrigen Zusammensetzungen zeichnen sich insbesondere auch dadurch aus, dass sie im Wesentlichen frei von Konservierungsmitteln sind. Hierbei ist von besonderem Vorteil, dass diese Zusammensetzungen frei von organischen bioziden Konservierungsmitteln sein können. Es ist mit den erfindungsgemäßen Zusammensetzungen demgemäß nicht mehr erforderlich, auf Topf- und/oder Filmkonservierungsmittel zurückgreifen zu müssen.

Als besonders vorteilhaft hat sich im Zusammenhang mit den erfindungsgemäßen wässrigen Zusammensetzungen herausgestellt, dass diese über einen längeren Zeitraum sehr stabil sind und nicht zu Abbau- oder Umwandlungsreaktionen neigen. Als sehr vorteilhaft hat sich auch erwiesen, dass es mit den erfindungsgemäßen wässrigen Zusammensetzungen gelingt, einen alkalisch eingestellten pH-Wert über einen sehr langen Zeitraum konstant zu halten, beispielsweise in einem Bereich von 9,0 bis 12,0 und insbesondere auch in einem Bereich von 10,0 bis 11,5.

Die erfindungsgemäßen Zusammensetzungen können ferner Wasserglas und/oder Kieselsol enthalten. Diese Komponenten können zur Einstellung des pH-Wertes eingesetzt werden, aber auch als anorganische Bindemittel fungieren. Das Wasserglas ist hierbei bevorzugt ausgewählt aus der Gruppe bestehend aus Natrium-, Kalium- und Lithiumwasserglas. Selbstverständlich können auch beliebige Mischungen unterschiedlicher Wassergläser eingesetzt werden. Bevorzugt wird für die erfindungsgemäßen Zusammensetzungen auf Kaliumwasserglas zurückgegriffen. Bei Wasserglas handelt es sich zum Beispiel um Reaktionsprodukte aus Alkalicarbonaten bzw. -hydroxiden mit Quarzsand. Diese werden kommerziell häufig in Form wässriger Lösungen angeboten. In diesen kommerziell erhältlichen wässrigen Lösungen liegt das Wasserglas im Allgemeinen mit einem Feststoffanteil von 28 Gew.-% vor. Wasserglas kann alternativ grundsätzlich auch in Pulverform eingesetzt werden. Sofern Wasserglas in den erfindungsgemäßen Zusammensetzungen zum Einsatz kommt, liegen in diesen Zusammensetzungen regelmäßig im Bereich von 0,1 bis 3,5 Gew.-%, vorzugsweise im Bereich von 0,3 bis 2,4 Gew-% und besonders bevorzugt im Bereich von 0,6 bis 1,8 Gew.-% vor, jeweils bezogen auf das Gesamtgewicht der Zusammensetzung und unter Zugrundelegung des Trockengewichtsanteils des Wasserglases.

Geeignete Kieselsole sind dem Fachmann bekannt. Kieselsole sind im Handel in Form von wässrigen kolloidalen Suspensionen von Polykieselsäuremolekülen erhältlich. Das in wässrigen Systemen vorliegende Kieselsol ist vorzugsweise alkalisch und hat besonders bevorzugt pH-Wert größer 9.

Der pH-Wert kann alternativ oder zusätzlich zur Zugabe von Wasserglas und/oder Kieselsol auch durch geeignete Basen wie Alkali- oder Erdalkalihydroxide, z.B. Kaliumhydroxid und/oder Aminverbindungen wie z.B. 2-Amino-2-ethyl-1, 3-propandiol eingestellt werden.

Besonders bevorzugte erfindungsgemäße wässrige Zusammensetzungen enthalten a) mindestens ein Pigment und/oder mindestens einen Füllstoff, b) mindestens ein Netz- und/oder Dispergiermittel, c) mindestens ein Feuchthaltemittel, insbesondere Polyalkylenglykole, und/oder mindestens einen Wachs, d) mindestens ein wasserlösliches Alkylsilikonat, insbesondere Kaliummethylsilikonat, f) mindestens einen Verdicker, insbesondere Polysaccharid-Verdicker, und/oder Schichtsilikat-Verdicker, insbesondere organisch modifizierte Schichtsilikate, und mindestens einen Entschäumer.

Schließlich können die erfindungsgemäßen wässrigen Zusammensetzungen auch mindestens ein Bindemittel umfassen. Hierbei kann es sich um ein anorganisches Bindemittel, beispielsweise Wasserglas und/oder Kieselsol, wie vorangehend bereits spezifiziert, oder auch um ein organisches Bindemittel handeln.

Solche erfindungsgemäßen Zusammensetzungen haben sich als besonders zweckmäßig erwiesen, enthaltend 2 bis 80 Gew.-%, vorzugsweise 5 bis 75 Gew.-% und besonders bevorzugt 10 bis 70 Gew.-%, an Komponente a), 0,2 bis 20 Gew.-%, vorzugsweise 1 bis 18 Gew.-% und besonders bevorzugt 2 bis 15 Gew.-%, an Komponente b), 0,1 bis 20 Gew.-%, vorzugsweise 0,5 bis 10 Gew.-% und besonders bevorzugt 1,0 bis 6,0 Gew.-%, an Komponente c), 0,01 bis 5,0 Gew.-%, vorzugsweise 0,1 bis 2 Gew.-% und besonders bevorzugt 0,2 bis 1 Gew.-%, an Komponente d) und/oder, insbesondere und, 0,001 bis 5 Gew.-%, vorzugsweise 0,01 bis 3,5 Gew.-% und besonders bevorzugt 0,1 bis 2,5 Gew.-%, an Komponente f), insbesondere an Verdicker und/oder Entschäumer, wobei die Anteile der die Zusammensetzung bildenden Komponenten Feststoffanteile oder, sofern bei 20°C nicht als Feststoff vorliegend, die nicht-wässrigen Wirkstoffanteile darstellen und wobei die Menge an die Zusammensetzung bildenden Komponenten stets so gewählt wird, dass sich in der Summe 100,0 Gew.-% ergeben.

In den erfindungsgemäßen wässrigen Zusammensetzungen liegt Wasser, bezogen auf das Gesamtgewicht dieser Zusammensetzung, vorzugsweise in einer Menge im Bereich von 10 bis 90 Gew.-% und besonders bevorzugt im Bereich von 25 bis 80 Gew.-% vor.

Bei der erfindungsgemäßen Zusammensetzung, insbesondere Farbtonzusammensetzung, kann es sich um eine Abtön- und/oder Aufhellpaste handeln.

Die der Erfindung zu Grunde liegende Aufgabe wird des Weiteren gelöst durch Kit-of-parts Abtönsystem (auch erstes Abtönsystem genannt), umfassend A) mindestens eine erfindungsgemäße wässrige Zusammensetzung, insbesondere Farbtonzusammensetzung oder Extenderzusammensetzung, vorzugsweise mindestens zwei erfindungsgemäße wässrige Zusammensetzungen, insbesondere mindestens zwei Farbtonzusammensetzungen und/oder Extenderzusammensetzungen, besonders bevorzugt mindestens drei erfindungsgemäße wässrige Zusammensetzungen, insbesondere mindestens drei Farbtonzusammensetzungen und/oder Extenderzusammensetzungen, und B) mindestens eine, insbesondere genau eine, Abtönbasiszusammensetzung (auch erste Abtönbasiszusammensetzung genannt), bestehend aus oder enthaltend mindestens ein Bindemittel sowie gegebenenfalls mindestens ein Lösemittel und gegebenenfalls mindestens ein zweites Additiv.

Die Abtönbasiszusammensetzung, auch Abtönbase genannt, des erfindungsgemäßen Kit-of-parts Abtönsystems stellt z.B. eine wässrige Lasur, einen Wasserlack, eine lösemittelhaltige Lasur, einen Lösemittellack, eine Dispersionsfarbe, eine Kalkfarbe, eine Silikatfarbe, eine Silikonharzfarbe, eine Dispersionssilikatfarbe, einen Leichtputz, eine Bodenbeschichtung, einen Putz, insbesondere einen Silikonputz oder einen Silikatputz dar, oder bildet eine Grundrezeptur für die vorangehend genannten Systeme. Abtönbasiszusammensetzungen sind vorzugsweise ebenso wie die erfindungsgemäße wässrige Zusammensetzung, konservierungsmittelfrei.

Bevorzugt kommen dabei solche Abtönbasiszusammensetzungen zum Einsatz, die einen VOC-Gehalt kleiner 10 g/Liter und besonders bevorzugt einen VOC-Gehalt kleiner 1 g/Liter aufweisen.

Für die Bestimmung des VOC-Gehalts sowie für die Definition von flüchtigen organischen Verbindungen (VOC) bzw. von organischen Verbindungen kann im Sinne der vorliegenden Erfindung Rückgriff genommen werden auf die Richtlinie 2004/42/EG des europäischen Parlaments und des Rates vom 21. April 2004.

Für das Bindemittel der Abtönbasiszusammensetzung - wie auch für das Bindemittel der erfindungsgemäßen wässrige Zusammensetzung - kann zweckmäßigerweise auf ein organisches Bindemittel in Form einer wässrigen Dispersion auf Basis von Polymeren enthaltend Acrylate, Vinylacetat und/oder Styrol, insbesondere auf Basis von Reinacrylaten und/oder Terpolymeren, und/oder ein anorganisches Bindemittel auf Basis von Wasserglas und/oder Kieselsol, und/oder auf ein Hybridbindemittel, insbesondere eine wässrige Organosilikat-Hybriddispersion, und/oder auf ein Stärke- und/oder Stärkehybridbindemittel zurückgegriffen werden. Alternativ oder zusätzlich können als geeignete Bindemittel auch Acrylharze, Acrylsilikonharze, Silikonharze, Urethanharze, ungesättigte Polyesterharze oder Alkydharze sowie deren Mischungen zum Einsatz kommen.

Grundsätzlich kommen als geeignete organische Bindemittel für die erfindungsgemäßen wässrigen Zusammensetzungen wie auch für die Abtönbasiszusammensetzungen der ersten Abtönsysteme wie auch der zweiten Abtönsysteme (wie nachfolgend ausgeführt) Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten in Betracht. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer besonders zweckmäßigen Ausgestaltung in Form einer wässrigen Bindemitteldispersion eingesetzt. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure, insbesondere der Versatinsäure, und gegebenenfalls Vinylaromaten, insbesondere Styrol. Geeignete Acrylatbindemittel verfügen in einer zweckmäßigen Ausgestaltung über eine Molmasse im Bereich von 300.000 g/mol und darüber. Besonders geeignete organische Bindemittel weisen eine Mindestfilmbildetemperatur (MFT-Wert), bestimmt gemäß ISO 2115:1996 (Ausgabedatum: 2001-04), kleiner oder gleich 10, insbesondere kleiner oder gleich 7 und besonders bevorzugt kleiner gleich 5 auf. Der Trockengewichtsanteil dieser organischen Bindemittel kann grundsätzlich in weiten Bereichen variiert werden.

Das erfindungsgemäße erste Kit-of-parts Abtönsystem eignet sich für die Herstellung, insbesondere konservierungsmittelfreier, abtönender bzw. abgetönter Anstrich- und Putzsysteme und insbesondere für die Herstellung von abgetönten wässrigen Lasuren, Wasserlacken, lösemittelhaltigen Lasuren, Lösemittellacken, Anstrichfarben, insbesondere Dispersionsfarben, besonders bevorzugt Dispersionsaußenfarben, Kalkfarben, Silikatfarben, Silikonharzfarben, Dispersionssilikatfarben, Sol-Silikat-Farben und/oder Nano-Hybridfarben, insbesondere auf Basis einer wässrigen Organosilikat-Hybrid-Dispersion, Bodenbeschichtungen oder Putzen sowie insbesondere von Silikonharzputzen, Silikatputzen, Sol-Silikat-Putzen, Leichtputzen, Organosilikat-Hybriddispersionsputzen und/oder Kunstharzputze.

Die der Erfindung zugrundeliegende Aufgabe wird des Weiteren gelöst durch ein weiteres Kit-of-parts Abtönsystem (auch zweites Abtönsystem genannt), umfassend A') mindestens eine wässrige Zusammensetzung, insbesondere Farbtonzusammensetzung oder Extenderzusammensetzung, vorzugsweise mindestens zwei wässrige Zusammensetzungen, insbesondere mindestens zwei Farbtonzusammensetzungen und/oder Extenderzusammensetzungen, besonders bevorzugt mindestens drei wässrige Zusammensetzungen, insbesondere mindestens drei Farbtonzusammensetzungen und/oder Extenderzusammensetzungen, enthaltend oder bestehend aus mindestens einem Konservierungsmittel, das sich unter alkalischen Bedingungen zersetzt, mindestens einem Pigment und/oder mindestens einem Füllstoff, mindestens ein Netz- und/oder Dispergiermittel und gegebenenfalls mindestens einem ersten Additiv, und B') mindestens eine, insbesondere genau eine, alkalische Abtönbasiszusammensetzung (auch zweite Abtönbasiszusammensetzung genannt), bestehend aus oder enthaltend mindestens ein Bindemittel sowie gegebenenfalls mindestens ein Lösemittel und gegebenenfalls mindestens ein zweites Additiv.

Ferner wird die der Erfindung zugrundeliegende Aufgabe gelöst durch ein weiteres Kit-of-parts Abtönsystem (auch drittes Abtönsystem genannt), umfassend A") mindestens eine wässrige Zusammensetzung, insbesondere Farbtonzusammensetzung oder Extenderzusammensetzung, vorzugsweise mindestens zwei wässrige Zusammensetzungen, insbesondere mindestens zwei Farbtonzusammensetzungen und/oder Extenderzusammensetzungen, besonders bevorzugt mindestens drei wässrige Zusammensetzungen, insbesondere mindestens drei Farbtonzusammensetzungen und/oder Extenderzusammensetzungen, enthaltend oder bestehend aus mindestens einem Konservierungsmittel, das sich in Gegenwart von mindestens einem Reduktionsmittel, insbesondere Cystein, mindestens einem Thiosulfate und/oder mindestens einem Sulfit, zersetzt, mindestens einem Pigment und/oder mindestens einem Füllstoff, mindestens ein Netz- und/oder Dispergiermittel und gegebenenfalls mindestens einem ersten Additiv, und B") mindestens eine, insbesondere genau eine, gegebenenfalls alkalische, Abtönbasiszusammensetzung (auch dritte Abtönbasiszusammensetzung genannt), bestehend aus oder enthaltend mindestens ein Bindemittel, mindestens ein Reduktionsmittel, insbesondere Cystein, mindestens ein Thiosulfat und/oder mindestens ein Sulfit, sowie gegebenenfalls mindestens ein Lösemittel und gegebenenfalls mindestens ein zweites Additiv.

Die Farbtonzusammensetzung der dritten Ausführungsform eines erfindungsgemäßen Kit-of-parts Abtönsystems kann neutral, leicht basisch und sauer sein. Vorzugsweise ist sie neutral oder basisch eingestellt. In entsprechender Weise kann bei der dritten Ausführungsform eines erfindungsgemäßen Kit-of-parts Abtönsystems auch die dazugehörige Abtönbasiszusammensetzung neutral, basisch und sauer sein. Auch diese ist bevorzugt basisch eingestellt.

Die in den vorangehenden (zweiten und dritten) Kit-of-parts Abtönsystemen genannten Komponenten entsprechen den vorangehend genannten Komponenten in ihrer allgemeinen Ausführungsform wie auch in ihren bevorzugten Ausgestaltungen, wobei jedoch in Bezug auf das zweite Abtönsystem zu berücksichtigen ist, dass ein solches Konservierungsmittel einzusetzen ist, das sich im alkalischen Milieu, vorzugsweise bei einem pH-Wert größer oder gleich 9,0, besonders bevorzugt größer oder gleich 10,0, zersetzt, und wobei in Bezug auf das dritte Abtönsystem zu berücksichtigen ist, dass ein solches Konservierungsmittel einzusetzen ist, das sich in Gegenwart von mindestens einem Reduktionsmittel, insbesondere Cystein, mindestens einem Thiosulfat und/oder mindestens einem Sulfit, zersetzt. Auch hat die mindestens eine Abtönbasiszusammensetzung in Bezug auf das zweite Abtönsystem und gegebenenfalls auch in Bezug auf das dritte Abtönsystem vorzugsweise einen pH-Wert größer oder gleich 9,0, besonders bevorzugt größer oder gleich 10,0 aufzuweisen. Die mindestens eine Farbtonzusammensetzung verfügt in Bezug auf das zweite Abtönsystem und gegebenenfalls auch in Bezug auf das dritte Abtönsystem zweckmäßiger Weise über einen pH-Wert kleiner oder gleich 9, vorzugsweise kleiner oder gleich 8,5 und besonders bevorzugt kleiner oder gleich 8,0.

Hierbei ist ein solches erfindungsgemäßes zweites Abtönsystem besonders bevorzugt, bei dem das mindestens eine Konservierungsmittel, vorzugsweise 5-Chlor-2-methyl-4-isothiazolin-3-on (CIT), sich unter alkalischen Bedingungen, insbesondere bei einem pH-Wert größer oder gleich 9,0, mit einer Halbwertszeit kleiner 25 Tagen, vorzugsweise kleiner oder gleich 5 Tagen und besonders bevorzugt kleiner oder gleich 3 Tagen zersetzt.

Ferner ist ein solches erfindungsgemäßes drittes Abtönsystem besonders bevorzugt, bei dem das mindestens eine Konservierungsmittel 5-Chlor-2-methyl-4-isothiazolin-3-on (CIT) umfasst oder darstellt.

Besonders geeignete Konservierungsmittel für dieses erfindungsgemäße zweite wie auch für das erfindungsgemäße dritte Abtönsystem umfassen oder bestehen aus Isothiazolinonen. Unter diesen Isothiazolinonen sind 2-Methyl-isothiazolin-3-on (MIT), 5-Chlor-2-methyl-4-isothiazolin-3-on (CIT) und deren beliebige Mischungen besonders bevorzugt. Ganz besonders bevorzugt wird hierbei auf, insbesondere in reiner Form vorliegendes, 5-Chlor-2-methyl-4-isothiazolin-3-on (CIT) zurückgegriffen.

Diese zweite Ausgestaltung eines erfindungsgemäßen Kit-of-parts Abtönsystems zeichnet sich insbesondere auch dadurch aus, dass diese neben dem mindestens einen Konservierungsmittel, das sich unter alkalischen Bedingungen zersetzt, keine weiteren Konservierungsmittel enthält. Dieses trifft in entsprechender Weise in einer bevorzugten Ausgestaltung auch auf die dritte Ausgestaltung des erfindungsgemäßen Kit-of-parts Abtönsystems zu.

Bei der zweiten Ausführungsform eines erfindungsgemäßen Kit-of-parts Abtönsystems besitzt die Farbtonzusammensetzung, enthaltend das Konservierungsmittel, das sich unter alkalischen Bedingungen zersetzt, regelmäßig einen pH-Wert kleiner 9, vorteilhafterweise kleiner oder gleich 8,5, bevorzugt kleiner oder gleich 7,5 und besonders bevorzugt von etwa 7 oder kleiner 7. Die Farbtonzusammensetzung der zweiten Ausführungsform eines erfindungsgemäßen Kit-of-parts Abtönsystems kann demgemäß neutral, leicht basisch und sauer sein. Auf diese Weise kann sichergestellt werden, dass die Farbtonzusammensetzung dieser zweiten Ausführungsform eines erfindungsgemäßen Abtönsystems während der Lagerung resistent gegen Bakterien- und/oder Pilzbefall ist. Bei Vermischen der alkalischen Abtönbasiszusammensetzung dieser zweiten Ausführungsform eines erfindungsgemäßen Abtönsystems zersetzten sich die alkalisch abbaubaren Konservierungsmittel, so dass man zu konservierungsmittelfreien Anstrich- und Putzsystemen gelangt. Hierfür wird diese Abtönbasiszusammensetzung vorzugweise auf einen pH-Wert ≥ 9,0 und bevorzugt ≥ 10,0 eingestellt.

Ferner wird die der Erfindung zu Grunde liegende Aufgabe auch gelöst durch ein, insbesondere konservierungsmittelfreies, Anstrich- oder Putzsystem erhältlich aus dem ersten bzw. erfindungsgemäßen Kit-of-parts Abtönsystems durch Vermischen der Zusammensetzungen A) mit der Abtönbasiszusammensetzung B) bzw. durch Vermischen der Zusammensetzungen A') mit der Abtönbasiszusammensetzung B') oder durch Vermischen der Zusammensetzung A") mit einer Abtönbasiszusammensetzung B").

Bei den erfindungsgemäßen Anstrich- bzw. Putzsystemen kann es sich in zweckmäßigen Ausgestaltungen um eine abgetönte wässrige Lasur, einen Wasserlack, eine lösemittelhaltige Lasur, einen Lösemittellack, eine Anstrichfarbe, insbesondere eine Dispersionsfarbe, besonders bevorzugt eine Dispersionsaußenfarbe, eine Dispersionssilikatfarbe, eine Silikat-farbe, eine Silikonharzfarbe, eine Sol-Silikat-Farbe und/oder Nano-Hybridfarben, insbesondere auf Basis einer wässrigen Organosilikat-Hybrid-Dispersion, eine Bodenbeschichtung oder einen Putz, insbesondere einen Silikonharzputz, einen Leichtputz einen Sol-Silikat-Putz, einen Organosilikat-Hybriddispersionsputz und, einen Kunstharzputz und/oder einen Silikatputz handeln.

Geeignete Lösemittel, die bei der Herstellung lösemittelbasierter erfindungsgemäßer Anstrich- bzw. Putzsysteme zum Einsatz kommen können, umfassen z.B. aromatenfreies Testbenzin und/oder Polyalkylenglykole, insbesondere Polyethylenglykole. Unter den Polyalkylenglykolen, insbesondere Polyethylenglykolen, sind solche mit einem Molgewicht größer 200 Dalton und vorzugsweise im Bereich von 300 bis 600 Dalton, bevorzugt.

Bevorzugt sind insbesondere solche erfindungsgemäßen Anstrich- und Putzsysteme, die einen VOC-Gehalt kleiner 10 g/Liter und besonders bevorzugt kleiner 1 g/Liter aufweisen.

Grundsätzlich sind mit der vorliegenden Erfindung wasserbasierte Anstrich- und Putzsysteme zugänglich, die einen VOC-Gehalt kleiner 150 g/Liter, bevorzugte kleiner oder gleich 130 g/Liter, besonders bevorzugt kleiner oder gleich 100 g/Liter, weiter bevorzugt kleiner oder gleich 30 g/Liter, noch weiter bevorzugt kleiner oder gleich 10 g/Liter und insbesondere kleiner oder gleich 1 g/Liter aufweisen.

Ferner sind mit der vorliegenden Erfindung regelmäßig auch lösemittelbasierte Anstrich- und Putzsysteme zugänglich, die einen VOC-Gehalt kleiner 450 g/Liter, bevorzugte kleiner oder gleich 430 g/Liter, besonders bevorzugt kleiner oder gleich 400 g/Liter, weiter bevorzugt kleiner oder gleich 300 g/Liter, noch weiter bevorzugt kleiner oder gleich 100 g/Liter, noch weiter bevorzugt kleiner oder gleich 30 g/Liter und insbesondere kleiner oder gleich 10 g/Liter aufweisen.

Mit der vorliegenden Erfindung sind demgemäß insbesondere auch solche lösemittelbasierten Anstrich- und Putzsysteme umfasst, die bei einem Festkörpergehalt kleiner 20 % einen maximalen VOC-Gehalt kleiner oder gleich 2 Gew.-%, vorzugsweise kleiner oder gleich 1 Gew.-%. Bei einem Festkörpergehalt größer oder gleich 20 % bis kleiner 30 % einen VOC-Gehalt kleiner oder gleich 8 Gew.-%, vorzugsweise kleiner oder gleich 4 Gew.-%, und bei einem Festkörpergehalt größer oder gleich 30 % einen VOC-Gehalt kleiner oder gleich 10 Gew.-%, vorzugsweise kleiner oder gleich 5 Gew.-%. aufweisen.

Für die Bestimmung des VOC-Gehalts sowie für die Definition von flüchtigen organischen Verbindungen (VOC) bzw. von organischen Verbindungen kann im Sinne der vorliegenden Erfindung Rückgriff genommen werden auf die Richtlinie 2004/42/EG des europäischen Parlaments und des Rates vom 21. April 2004.

Die erfindungsgemäßen wasserbasierten Anstrich- und Putzsysteme werden im Sinne der Erfindung im Einklang mit der "Vergabegrundlage für Umweltzeichen" der RAL gemeinnützige GmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, wie zum Beispiel MIT und/oder BIT (1,2-Benzisothiazol-3(2H)-on), auf die Einzelsubstanz bezogen (einschließlich Formaldehyd) in einer Menge < 2 ppm, sowie auch in Bezug auf CIT (5-Chlor-2-Methyl-4-Isothiazolin) in einer Menge < 0,5 ppm enthalten sind.

Handelt es sich bei den erfindungsgemäßen Anstrich- und Putzsystemen um lösemittelhaltige Systeme wie lösemittelhaltige Lasuren oder Lösemittellacke, sind diese im Sinne der Erfindung als emissions- und schadstoffarm zu bezeichnen, wenn sie der "Vergabegrundlage für Umweltzeichen" er RAL gemeinnützige GmbH betreffend "Emission- und schadstoffarme Lacke RAL-UZ 12a" (Ausgabe August 2011) genügen.

Die der Erfindung zugrundeliegende Aufgabe wird des Weiteren gelöst durch einen Anstrich oder Putz, erhältlich durch Auftragen des erfindungsgemäßen abgetönten Anstrich- bzw. Putzsystems auf eine Substratoberfläche.

Außerdem wird die der Erfindung zugrunde liegende Erfindung gelöst durch ein Verfahren zum Abtönen einer erfindungsgemäßen wässrigen Zusammensetzung, insbesondere Farbtonzusammensetzung oder Extenderzusammensetzung, vorzugsweise Farbtonzusammensetzung, umfassend die Schritte i) Zurverfügungstellung von mindestens einer erfindungsgemäßen wässrigen Zusammensetzung, insbesondere Farbtonzusammensetzung oder Extenderzusammensetzung, vorzugsweise von mindestens zwei und besonders bevorzugt von mindestens drei erfindungsgemäßen wässrigen Zusammensetzungen, insbesondere Farbtonzusammensetzungen und/oder Extenderzusammensetzungen, ii) Zurverfügungstellung der mindestens einen Abtönbasiszusammensetzung (erste Abtönbasiszusammensetzung) des erfindungsgemäßen ersten Abtönsystems, und iii) Vermischen der Farbtonzusammensetzung gemäß i) und der Abtönbasiszusammensetzung gemäß ii) unter Erhalt eines abgetönten Anstrich- oder Putzsystems, insbesondere des erfindungsgemäßen es abgetönten Anstrich- oder Putzsystems.

Ferner wird die der Erfindung zugrunde liegende Erfindung gelöst durch ein Verfahren zum Abtönen einer, insbesondere erfindungsgemäßen, wässrigen Zusammensetzung, insbesondere Farbtonzusammensetzung oder Extenderzusammensetzung, vorzugsweise Farbtonzusammensetzung, umfassend die Schritte i') Zurverfügungstellung von mindestens einer, insbesondere erfindungsgemäßen, wässrigen Zusammensetzung, insbesondere Farbtonzusammensetzung oder Extenderzusammensetzung, vorzugsweise von mindestens zwei und besonders bevorzugt von mindestens drei wässrigen Zusammensetzungen, insbesondere Farbtonzusammensetzungen und/oder Extenderzusammensetzungen, ii') Zurverfügungstellung der mindestens einen zweiten Abtönbasiszusammensetzung des erfindungsgemäßen zweiten Abtönsystems, und iii') Vermischen der Farbtonzusammensetzung gemäß i') und der zweiten Abtönbasiszusammensetzung gemäß ii`) unter Erhalt eines abgetönten Anstrich- oder Putzsystems, insbesondere des erfindungsgemäßen abgetönten Anstrich- oder Putzsystems.

Schließlich wird die der Erfindung zugrunde liegende Erfindung gelöst durch ein Verfahren zum Abtönen einer, insbesondere erfindungsgemäßen, wässrigen Zusammensetzung, insbesondere Farbtonzusammensetzung oder Extenderzusammensetzung, vorzugsweise Farbtonzusammensetzung, umfassend die Schritte i") Zurverfügungstellung von mindestens einer, insbesondere erfindungsgemäßen, wässrigen Zusammensetzung, insbesondere Farbtonzusammensetzung oder Extenderzusammensetzung, vorzugsweise von mindestens zwei und besonders bevorzugt von mindestens drei wässrigen Zusammensetzungen, insbesondere Farbtonzusammensetzungen und/oder Extenderzusammensetzungen, ii") Zurverfügungstellung der mindestens einen dritten Abtönbasiszusammensetzung des erfindungsgemäßen dritten erfindungsgemäßen Abtönsystems, und iii") Vermischen der Farbtonzusammensetzung gemäß i") und der dritten Abtönbasiszusammensetzung gemäß ii") unter Erhalt eines abgetönten Anstrich- oder Putzsystems, insbesondere des erfindungsgemäßen abgetönten Anstrich- oder Putzsystems.

Mit den erfindungsgemäßen wässrigen Zusammensetzungen gelingt z.B. die Herstellung konservierungsmittelfreier eingefärbter wasserbasierter Farben, Putze, Wasserlacke, wasserbasierter Lasuren und Spachtelmassen, wobei vorzugsweise auf den Einsatz jedweder Biozide in den erfindungsgemäßen wässrigen Zusammensetzungen verzichtet werden kann.

Selbst bei Infektion mit Pilzsuspensionen gelangte man zu erfindungsgemäßen wässrigen Zusammensetzungen, bei denen das Keimwachstum unterbunden ist. Das gleiche traf zu bei Infektion mit Bakteriensuspensionen. Entsprechende Wachstumskontrolle der Keime wurde auch festgestellt für die erste Ausführungsform eines erfindungsgemäßen Abtönsystems wie auch für die zweite Ausführungsform eines erfindungsgemäßen Kit-of-parts Abtönsystems sowie für die aus diesen Abtönsystemen erhaltenen Anstrich- und Putzsysteme, welche Mischungen aus den genannten wässrigen Zusammensetzungen und Abtönbasiszusammensetzungen darstellen.

Die erfindungsgemäßen wässrigen Zusammensetzungen und die erfindungsgemäßen Abtönsysteme wie auch die erfindungsgemäßen Anstrich- und Putzsysteme werden im Sinne der Erfindung im Einklang mit der "Vergabegrundlage für Umweltzeichen" der RAL gemeinnützige GmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, wie zum Beispiel MIT und/oder BIT (1,2-Benzisothiazol-3(2H)-on), auf die Einzelsubstanz bezogen (einschließlich Formaldehyd) in einer Menge < 2 ppm, sowie auch in Bezug auf CIT (5-Chlor-2-Methyl-4-Isothiazolin) in einer Menge < 0,5 ppm enthalten sind.

Die erfindungsgemäßen wässrigen Zusammensetzungen verfügen auch ohne Konservierungsmittel über ein hohes Maß an Schimmelresistenz. Die mit diesen wässrigen Zusammensetzungen sowie mit den erfindungsgemäßen Abtönsystemen wie auch die erfindungsgemäßen Anstrich- und Putzsysteme erhaltenen Beschichtungen sind regelmäßig raumlufthygienisch unbedenklich. Unter anwendungstechnischen Punkten ist überdies von Vorteil, dass die erfindungsgemäßen wässrigen Zusammensetzungen eine Vielzahl an Farbtonzusammensetzungen ermöglichen. Die vorangehend genannten Vorteile können dabei insbesondere auch erhalten werden sowohl für diejenigen erfindungsgemäßen wässrigen Zusammensetzungen, insbesondere Farbtonzusammensetzungen und Extenderzusammensetzungen, als auch für diejenigen erfindungsgemäßen Abtönsysteme, die einen mit VOC-Gehalten kleiner 10 g/Liter oder die in einer noch weiter bevorzugen Ausgestaltung einen VOC-Gehalt kleiner 1 g/Liter aufweisen.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Zusammensetzung, insbesondere Farbtonzusammensetzung oder Extenderzusammensetzung, für ein Abtönsystem, enthaltend oder bestehend aus
a) mindestens einem Pigment und/oder mindestens einem Füllstoff,
b) mindestens einem Netz- und/oder Dispergiermittel,
c) mindestens einem Feuchthaltemittel, insbesondere Polyalkylenglykole, und/oder mindestens einem Wachs, insbesondere zugegeben in Form einer wässrigen Wachsemulsion,
d) mindestens einem Alkylalkoxysilan, Alkylalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol, Trialkylsilanol oder beliebigen Mischungen hiervon,
e) Aminverbindungen und
f) gegebenenfalls mindestens einem ersten Additiv,
wobei die wässrige Zusammensetzung, insbesondere die Farbtonzusammensetzung, einen pH-Wert größer oder gleich 9,0, vorzugsweise im Bereich von 10,0 bis 12,0 und besonders bevorzugt im Bereich von 10,5 bis 11,5, aufweist oder auf einen pH-Wert größer oder gleich 9,0, vorzugsweise im Bereich von 10,0 bis 12,0 und besonders bevorzugt im Bereich von 10,5 bis 11,5 eingestellt ist.

2. Zusammensetzung nach Anspruch 1, **dadurch gekennzeichnet, dass** das mindestens eine erste Additiv ausgewählt ist aus der Gruppe bestehend aus Entschäumern, Stabilisatoren, Flammschutzmitteln, Hydrophobierungsmitteln, Mattierungsmitteln, insbesondere Fällungskieselsäure, Rheologieadditiven, insbesondere Verdickern, Schichtsilikaten, organisch modifizierten Schichtsilikaten und/oder thixotropen Alkydharzen, Oberflächenadditiven, insbesondere Silikonoberflächenadditiven, beispielsweise polyethermodifiziertes Polymethylalkylsiloxan und/oder Silikonpolyether-Copolymere, Puffersubstanzen, Neutralisationsmittel, pH-Regulatoren, UV-Absorbern, Radikalfängern und Mischungen dieser Verbindungen, und insbesondere mindestens einen Verdicker und/oder mindestens einen Entschäumer umfasst.

3. Zusammensetzung nach Anspruch 2, **dadurch gekennzeichnet, dass** der Verdicker ausgewählt ist aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickem, Schichtsilikat-Verdickern, Polysaccharid-Verdickern, insbesondere Xanthan, und beliebigen Mischungen hiervon.

4. Zusammensetzung nach einem der vorangehenden Ansprüche, **dadurch gekennzeichnet, dass**
das mindestens eine Netz- und/oder Dispergiermittel ausgewählt ist aus der Gruppe bestehend aus Polycarboxylaten, insbesondere Salze von Polyacrylsäuren, Polyphosphaten, insbesondere lineare Polyphosphate und/oder zyklische Metaphosphate, Polyetherphosphaten, Polycarbonsäurepolymeren, Acrylblockcopolymeren, insbesondere CFRP-basierten Acrylblockcopolymeren, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxan, Alkindiol-ethoxylaten, Fluortensiden und beliebigen Mischungen hiervon, und insbesondere Polyetherphosphate, Kaliumsalze von Polycarbonsäurepolymeren, CFRP-basierte Acrylblockcopolymere, ethoxylierte Fettalkohole und/oder nichtionische gesättigte langkettige Alkohole umfasst.

5. Zusammensetzung nach einem der vorangehenden Ansprüche, **dadurch gekennzeichnet, dass**
diese im Wesentlichen frei von Konservierungsmitteln, vorzugsweise frei von organischen bioziden Konservierungsmitteln, besonders bevorzugt frei von Topf- und/oder Filmkonservierungsmitteln, ist.

6. Zusammensetzung nach einem der vorangehenden Ansprüche, ferner umfassend Wasserglas, ausgewählt aus der Gruppe bestehend aus Natrium-, Kalium-, Lithiumwasserglas und beliebigen Mischungen hiervon, und/oder Kieselsol.

7. Zusammensetzung nach einem der vorangehenden Ansprüche, enthaltend
a) mindestens ein Pigment und/oder mindestens einen Füllstoff,
b) mindestens ein Netz- und/oder Dispergiermittel,
c) mindestens ein Feuchthaltemittel, insbesondere Polyalkylenglykole, und/oder mindestens einen Wachs,
d) mindestens wasserlösliches Alkylsilikonat, insbesondere Kaliummethylsilikonat,
f) mindestens einen Verdicker, insbesondere Polysaccharid-Verdicker und/oder Schichtsilikat-Verdicker, insbesondere organisch modifizierte Schichtsilikate, undmindestens einen Entschäumer.

8. Zusammensetzung nach einem der vorangehenden Ansprüche, ferner umfassend mindestens ein Bindemittel.

9. Zusammensetzung nach einem der vorangehenden Ansprüche, enthaltend 2 bis 80 Gew.-%, vorzugsweise 5 bis 75 Gew.-% und besonders bevorzugt 10 bis 70 Gew.-%, an Komponente a),
0,2 bis 20 Gew.-%, vorzugsweise 1 bis 18 Gew.-% und besonders bevorzugt 2 bis 15 Gew.-%, an Komponente b),
0,1 bis 20 Gew.-%, vorzugsweise 0,5 bis 10 Gew.-% und besonders bevorzugt 1,0 bis 6,0 Gew.-%, an Komponente c),
0,01 bis 5,0 Gew.-%, vorzugsweise 0,1 bis 2 Gew.-% und besonders bevorzugt 0,2 bis 1 Gew.-%, an Komponente d) und/oder, insbesondere und,
0,001 bis 5 Gew.-%, vorzugsweise 0,01 bis 3,5 Gew.-% und besonders bevorzugt 0,1 bis 2,5 Gew.-%, an Komponente f), insbesondere an Verdicker und/oder Entschäumer, wobei die Anteile der die Zusammensetzung bildenden Komponenten Feststoffanteile oder, sofern bei 20°C nicht als Feststoff vorliegend, die nicht-wässrigen Wirkstoffanteile darstellen und wobei die Menge an die Zusammensetzung bildenden Komponenten stets so gewählt ist, dass sich in der Summe 100,0 Gew.-% ergeben.

10. Kit-of-parts-Abtönsystem für die Farbeinstellung von Anstrich- und Putzsystemen (auch erstes Abtönsystem genannt), umfassend
A) mindestens eine wässrige Zusammensetzung, insbesondere Farbtonzusammensetzung oder Extenderzusammensetzung, vorzugsweise mindestens zwei wässrige Zusammensetzungen, insbesondere mindestens zwei Farbtonzusammensetzungen und/oder Extenderzusammensetzungen, besonders bevorzugt mindestens drei wässrige Zusammensetzungen, insbesondere mindestens drei Farbtonzusammensetzungen und/oder Extenderzusammensetzungen, nach einem der vorangehenden Ansprüche, und
B) mindestens eine, insbesondere genau eine, Abtönbasiszusammensetzung (auch erste Abtönbasiszusammensetzung genannt), bestehend aus oder enthaltend
mindestens ein Bindemittel sowie
gegebenenfalls mindestens ein Lösemittel und
gegebenenfalls mindestens ein zweites Additiv.

11. Kit-of-parts-Abtönsystem für die Farbeinstellung von Anstrich- und Putzsystemen (auch zweites Abtönsystem genannt), umfassend
A') mindestens eine wässrige Zusammensetzung, insbesondere Farbtonzusammensetzung oder Extenderzusammensetzung, vorzugsweise mindestens zwei wässrige Zusammensetzungen, insbesondere mindestens zwei Farbtonzusammensetzungen und/oder Extenderzusammensetzungen, besonders bevorzugt mindestens drei wässrige Zusammensetzungen, insbesondere mindestens drei Farbtonzusammensetzungen und/oder Extenderzusammensetzungen, enthaltend oder bestehend aus mindestens einem Konservierungsmittel, das sich unter alkalischen Bedingungen zersetzt,
mindestens einem Pigment und/oder mindestens einem Füllstoff, mindestens einem Netz- und/oder Dispergiermittel und
gegebenenfalls mindestens einem ersten Additiv,
und
B') mindestens eine, insbesondere genau eine, alkalische Abtönbasiszusammensetzung (auch zweite Abtönbasiszusammensetzung genannt), bestehend aus oder enthaltend
mindestens ein Bindemittel sowie
gegebenenfalls mindestens ein Lösemittel und
gegebenenfalls mindestens ein zweites Additiv
oder umfassend
A") mindestens eine wässrige Zusammensetzung, insbesondere Farbtonzusammensetzung oder Extenderzusammensetzung, vorzugsweise mindestens zwei wässrige Zusammensetzungen, insbesondere mindestens zwei Farbtonzusammensetzungen und/oder Extenderzusammensetzungen, besonders bevorzugt mindestens drei wässrige Zusammensetzungen, insbesondere mindestens drei Farbtonzusammensetzungen und/oder Extenderzusammensetzungen, enthaltend oder bestehend aus mindestens einem Konservierungsmittel, das sich in Gegenwart von mindestens einem Reduktionsmittel, insbesondere Cystein, Thiosulfaten und/oder Sulfiten, zersetzt,
mindestens einem Pigment und/oder mindestens einem Füllstoff, mindestens ein Netz- und/oder Dispergiermittel und
gegebenenfalls mindestens einem ersten Additiv,
und
B") mindestens eine, insbesondere genau eine, gegebenenfalls alkalische, Abtönbasiszusammensetzung (auch dritte Abtönbasiszusammensetzung genannt), bestehend aus oder enthaltend
mindestens ein Bindemittel,
mindestens ein Reduktionsmittel, insbesondere Cystein, Thiosulfate und/oder Sulfite, sowie
gegebenenfalls mindestens ein Lösemittel und
gegebenenfalls mindestens ein zweites Additiv.

12. Abtönsystem nach Anspruch 11, **dadurch gekennzeichnet, dass**
das mindestens eine Konservierungsmittel, das sich unter alkalischen Bedingungen zersetzt, sich bei einem pH-Wert größer oder gleich 9,0, vorzugsweise größer oder gleich 10,0, zersetzt und/oder
dass die mindestens eine Abtönbasiszusammensetzung gemäß B' (zweite Abtönbasiszusammensetzung) einen pH-Wert größer oder gleich 9,0, vorzugsweise größer oder gleich 10,0, aufweist und/oder
die mindestens eine wässrige Zusammensetzung, insbesondere Farbtonzusammensetzung oder Extenderzusammensetzung, gemäß A' einen pH-Wert kleiner oder gleich 9, vorzugsweise kleiner oder gleich 8,5, und besonders bevorzugt kleiner oder gleich 8,0 aufweist.

13. Abtönsystem nach Anspruch 11 oder 12, **dadurch gekennzeichnet, dass** das mindestens eine Konservierungsmittel, das sich unter alkalischen Bedingungen zersetzt, sich unter alkalischen Bedingungen, insbesondere bei einem pH-Wert größer oder gleich 9,0, mit einer Halbwertszeit kleiner 25 Tagen, vorzugsweise kleiner oder gleich 5 Tagen und besonders bevorzugt kleiner oder gleich 3 Tagen, zersetzt.

14. Abtönsystem nach einem der Ansprüche 11 bis 13, **dadurch gekennzeichnet, dass** das Konservierungsmittel, das sich unter alkalischen Bedingungen und/oder in Gegenwart von mindestens einem Reduktionsmittel, insbesondere Cystein, Thiosulfaten und/oder Sulfiten, zersetzt, Isothiazolinone umfasst oder hieraus besteht, insbesondere ausgewählt aus der Gruppe bestehend aus 2-Methyl-isothiazolin-3-on (MIT), 5-Chlor-2-methyl-4-isothiazolin-3-on (CIT) und deren beliebigen Mischungen, insbesondere 5-Chlor-2-methyl-4-isothiazolin-3-on (CIT).

15. Abtönsystem nach einem der Ansprüche 11 bis 14, **dadurch gekennzeichnet, dass** dieses neben dem mindestens einen Konservierungsmittel, das sich unter alkalischen Bedingungen und/oder in Gegenwart von mindestens einem Reduktionsmittel, insbesondere Cystein, Thiosulfaten und/oder Sulfiten, zersetzt, keine weiteren Konservierungsmittel enthält.

16. Abtönsystem nach einem der Ansprüche 10 bis 15, **dadurch gekennzeichnet, dass** die wässrige Zusammensetzung, insbesondere Farbtonzusammensetzung oder Extenderzusammensetzung, eine Abtön- und/oder Aufhellpaste darstellt oder umfasst.

17. Abtönsystem nach einem der Ansprüche 10 bis 16, **dadurch gekennzeichnet, dass** die, insbesondere konservierungsmittelfreie, Abtönbasiszusammensetzung eine wässrige Lasur, einen Wasserlack, eine lösemittelhaltige Lasur, einen Lösemittellack, eine Dispersionsfarbe, eine Kalkfarbe, eine Silikatfarbe, eine Silikonharzfarbe, eine Dispersionssilikatfarbe, einen Leichtputz, eine Bodenbeschichtung, einen Putz, insbesondere einen Silikonputz oder einen Silikatputz, darstellt oder die Grundrezeptur hierfür ist.

18. Abtönsystem nach einem der Ansprüche 10 bis 17 oder wässrige Zusammensetzung nach Anspruch 8, **dadurch gekennzeichnet, dass** das Bindemittel der Abtönbasiszusammensetzung oder der wässrigen Zusammensetzung, insbesondere der Farbtonzusammensetzung, ein organisches Bindemittel in Form einer wässrigen Dispersion auf Basis von Polymeren enthaltend Acrylate, Vinylacetat und/oder Styrol, insbesondere auf Basis von Reinacrylaten und/oder Terpolymeren, oder ein anorganisches Bindemittel auf Basis von Wasserglas und/oder Kieselsol, oder ein Hybridbindemittel, insbesondere eine wässrige Organosilikat-Hybriddispersion, umfasst oder darstellt und/oder dass das Bindemittel auf einem Acrylharz, Acrylsiliconharz, Siliconharz, Urethanharz, ungesättigtem Polyesterharz oder Alkydharz basiert oder eine solche Verbindung umfasst oder darstellt.

19. Verwendung des Abtönsystems nach einem Ansprüche 10 bis 18 für die Herstellung, insbesondere konservierungsmittelfreier, abgetönter Anstrich- oder Putzsysteme, insbesondere von abgetönten wässrigen Lasuren, Wasserlacken, lösemittelhaltigen Lasuren, Lösemittellacken, Anstrichfarben, insbesondere Dispersionsfarben, besonders bevorzugt Dispersionsaußenfarben, Kalkfarben, Silikatfarben, Silikonharzfarben, Dispersionssilikatfarben, Sol-Silikat-Farben und/oder Nano-Hybridfarben, insbesondere auf Basis einer wässrigen Organosilikat-Hybrid-Dispersion, Bodenbeschichtungen oder Putzen, insbesondere Silikonharzputze, Silikatputze, Sol-Silikat-Putze, Leichtputze, Organosilikat-Hybriddispersionsputze und/oder Kunstharzputze.

20. Abgetöntes Anstrich- oder Putzsystem, insbesondere konservierungsmittelfreies Anstrich- oder Putzsystem, erhalten oder erhältlich aus dem Abtönsystem nach Anspruch 10 oder nach einem oder mehreren der Ansprüche 16 bis 18, soweit direkt oder indirekt rückbezogen auf Anspruch 10, durch Vermischen der Zusammensetzung A) mit einer Abtönbasiszusammensetzung B) oder erhältlich aus dem Abtönsystem nach einem oder mehreren der Ansprüche 11 bis 15 oder 16 bis 18, soweit letztere direkt oder indirekt rückbezogen sind auf Anspruch 11, durch Vermischen der Zusammensetzung A') mit einer Abtönbasiszusammensetzung B') oder durch Vermischen der Zusammensetzung A") mit einer Abtönbasiszusammensetzung B").

21. Anstrich- oder Putzsystem nach Anspruch 20, **dadurch gekennzeichnet, dass** dieses eine abgetönte wässrige Lasur, einen Wasserlack, eine lösemittelhaltige Lasur, einen Lösemittellack, eine Anstrichfarbe, insbesondere eine Dispersionsfarbe, besonders bevorzugt eine Dispersionsaußenfarbe, eine Dispersionssilikatfarbe, eine Kalkfarbe, eine Silikatfarbe, eine Silikonharzfarbe, eine Sol-Silikat-Farbe und/oder Nano-Hybridfarben, insbesondere auf Basis einer wässrigen Organosilikat-Hybrid-Dispersion, eine Bodenbeschichtung oder einen Putz, insbesondere einen Silikonharzputz, einen Leichtputz einen Sol-Silikat-Putz, einen Organosilikat-Hybriddispersionsputz und, einen Kunstharzputz und/oder einen Silikatputz, umfasst oder darstellt.

22. Anstrich- oder Putzsystem nach Anspruch 20 oder 21, **dadurch gekennzeichnet, dass**
dieses einen VOC-Gehalt kleiner 10 g/Liter, bevorzugt kleiner 1 g/Liter, aufweist.

23. Anstrich oder Putz, erhalten oder erhältlich durch Auftragen des abgetönten Anstrich- bzw. Putzsystems nach einem der Ansprüche 20 bis 22 auf eine Substratoberfläche.

24. Verfahren zum Abtönen einer wässrigen Zusammensetzung, insbesondere Farbtonzusammensetzung oder Extenderzusammensetzung, umfassend die Schritte.
i) Zurverfügungstellung von mindestens einer wässrigen Zusammensetzung, insbesondere Farbtonzusammensetzung oder Extenderzusammensetzung, vorzugsweise von mindestens zwei und besonders bevorzugt von mindestens drei wässrigen Zusammensetzungen, insbesondere Farbtonzusammensetzungen und/oder Extenderzusammensetzungen, gemäß einem oder mehreren der Ansprüche 1 bis 9,
ii) Zurverfügungstellung der mindestens einen Abtönbasiszusammensetzung (erste Abtönbasiszusammensetzung ) nach Anspruch 10 oder nach einem oder mehreren der Ansprüche 16 bis 18, soweit direkt oder indirekt rückbezogen auf Anspruch 10, und
iii) Vermischen der Farbtonzusammensetzung gemäß i) und der Abtönbasiszusammensetzung gemäß ii) unter Erhalt eines abgetönten Anstrich- oder Putzsystems, insbesondere nach einem der Ansprüche 20 bis 22; oder
i') Zurverfügungstellung von mindestens einer wässrigen Zusammensetzung, insbesondere Farbtonzusammensetzung oder Extenderzusammensetzung, vorzugsweise von mindestens zwei und besonders bevorzugt von mindestens drei wässrigen Zusammensetzungen, insbesondere Farbtonzusammensetzungen und/oder Extenderzusammensetzungen, insbesondere gemäß einem oder mehreren der Ansprüche 1 bis 9,
ii') Zurverfügungstellung der mindestens einen zweiten Abtönbasiszusammensetzung nach einem der Ansprüche 11 bis 15 oder 16 bis 18, soweit letztere direkt oder indirekt rückbezogen sind auf Anspruch 11, und
iii") Vermischen der Farbtonzusammensetzung gemäß i') und der zweiten Abtönbasiszusammensetzung gemäß ii') unter Erhalt eines abgetönten Anstrich- oder Putzsystems, insbesondere nach einem der Ansprüche 20 bis 22; oder
i") Zurverfügungstellung von mindestens einer wässrigen Zusammensetzung, insbesondere Farbtonzusammensetzung oder Extenderzusammensetzung, vorzugsweise von mindestens zwei und besonders bevorzugt von mindestens drei wässrigen Zusammensetzungen, insbesondere Farbtonzusammensetzungen und/oder Extenderzusammensetzungen, insbesondere gemäß einem oder mehreren der Ansprüche 1 bis 9,
ii") Zurverfügungstellung der mindestens einen dritten Abtönbasiszusammensetzung nach einem der Ansprüche 11 bis 15 oder 16 bis 18, soweit letztere direkt oder indirekt rückbezogen sind auf Anspruch 11, und
iii") Vermischen der Farbtonzusammensetzung gemäß i") und der dritten Abtönbasiszusammensetzung gemäß ii") unter Erhalt eines abgetönten Anstrich- oder Putzsystems, insbesondere nach einem der Ansprüche 20 bis 22.

## Claims

1. An aqueous composition, in particular colour composition or extender composition, for a tinting system, containing or consisting of
a) at least one pigment and/or at least one filler,
b) at least one wetting agent and/or dispersant,
c) at least one humectant, in particular polyalkylene glycols, and/or at least one wax, in particular added in the form of an aqueous wax emulsion,
d) at least one alkylalkoxysilane, alkylalkoxysiloxane, water-soluble alkyl siliconate, in particular potassium methyl siliconate, monoalkylsilanetriol, dialkylsilanediol, trialkylsilanol, alkali metal salt of monoalkylsilanetriol, in particular potassium methylsilanetriolate and/or potassium ethylsilanetriolate, dialkylsilanediol, trialkylsilanol or any mixtures thereof,
e) amine compounds, and
f) optionally at least one first additive,
wherein the aqueous composition, in particular the colour composition, has a pH of greater than or equal to 9.0, preferably in the range from 10.0 to 12.0 and particularly preferably in the range from 10.5 to 11.5, or is adjusted to a pH of greater than or equal to 9.0, preferably in the range from 10.0 to 12.0 and particularly preferably in the range from 10.5 to 11.5.

2. The composition according to Claim 1, **characterized in that**
the at least one first additive is selected from the group consisting of defoamers, stabilizers, flame retardants, hydrophobing agents, matting agents, in particular precipitated silica, rheological additives, in particular thickeners, phyllosilicates, organically modified phyllosilicates and/or thixotropic alkyd resins, surface additives, in particular silicone surface additives, for example polyether-modified polymethylalkylsiloxane and/or silicone-polyether copolymers, buffer substances, neutralizing agents, pH regulators, UV absorbers, free-radical scavengers and mixtures of these compounds, and in particular comprises at least one thickener and/or at least one defoamer.

3. The composition according to Claim 2, **characterized in that**
the thickener is selected from the group consisting of polyacrylate thickeners, polyurethane thickeners, polyurea thickeners, cellulose thickeners, in particular hydroxyethylcellulose and/or methylcellulose, polyvinyl alcohol thickeners, polyether polyol thickeners, phyllosilicate thickeners, polysaccharide thickeners, in particular xanthan, and any mixtures thereof.

4. The composition according to any one of the preceding claims, **characterized in that** the at least one wetting agent and/or dispersant is selected from the group consisting of polycarboxylates, in particular salts of polyacrylic acids, polyphosphates, in particular linear polyphosphates and/or cyclic metaphosphates, polyether phosphates, polycarboxylic acid polymers, acrylic block copolymers, in particular CFRP-based acrylic block copolymers, ethoxylated fatty alcohols, nonionic saturated long-chain alcohols, fatty alcohol sulfates, alkyl phosphonates, polysiloxane ethers, in particular methoxypolyethoxypropyltrisiloxane, alkynediol ethoxylates, fluorosurfactants and any mixtures thereof, and in particular comprises polyether phosphates, potassium salts of polycarboxylic acid polymers, CFRP-based acrylic block copolymers, ethoxylated fatty alcohols and/or nonionic saturated long-chain alcohols.

5. The composition according to any one of the preceding claims, **characterized in that** it is substantially free of preservatives, preferably free of organic biocidal preservatives, particularly preferably free of in-can and/or film preservatives.

6. The composition according to any one of the preceding claims, further comprising water glass selected from the group consisting of sodium, potassium or lithium water glass and any mixtures thereof, and/or silica sol.

7. The composition according to any one of the preceding claims, containing
a) at least one pigment and/or at least one filler,
b) at least one wetting agent and/or dispersant,
c) at least one humectant, in particular polyalkylene glycols, and/or at least one wax,
d) at least one water-soluble alkyl siliconate, in particular potassium methyl siliconate,
f) at least one thickener, in particular polysaccharide thickeners and/or phyllosilicate thickeners, in particular organically modified phyllosilicates, and at least one defoamer.

8. The composition according to any one of the preceding claims, further comprising at least one binding agent.

9. The composition according to any one of the preceding claims, containing 2 to 80 wt.%, preferably 5 to 75 wt.% and particularly preferably 10 to 70 wt.%, of component a),
0.2 to 20 wt.%, preferably 1 to 18 wt.% and particularly preferably 2 to 15 wt.%, of component b),
0.1 to 20 wt.%, preferably 0.5 to 10 wt.% and particularly preferably 1.0 to 6.0 wt.%, of component c),
0.01 to 5.0 wt.%, preferably 0.1 to 2 wt.% and particularly preferably 0.2 to 1 wt.%, of component d) and/or, in particular and,
0.001 to 5 wt.%, preferably 0.01 to 3.5 wt.% and particularly preferably 0.1 to 2.5 wt.%, of component f), in particular of thickener and/or defoamer, wherein the proportions of the components forming the composition are solids contents or, if not in solid form at 20°C, the non-aqueous active ingredient contents and wherein the quantity of the components forming the composition is always selected such that the sum amounts to 100.0 wt.%.

10. A kit of parts tinting system for adjusting the colour of coating and plastering systems (also denoted first tinting system) comprising
A) at least one aqueous composition, in particular colour composition or extender composition, preferably at least two aqueous compositions, in particular at least two colour compositions and/or extender compositions, particularly preferably at least three aqueous compositions, in particular at least three colour compositions and/or extender compositions, according to any one of the preceding claims, and
B) at least one, in particular exactly one, base tinting system (also denoted first base tinting composition), consisting of or containing
at least one binding agent and
optionally at least one solvent and
optionally at least one second additive.

11. Kit-of-parts tinting system for adjusting the colour of coating of coating and plaster systems (also denoted second tinting system), comprising
A') at least one aqueous composition, in particular colour composition or extender composition, preferably at least two aqueous compositions, in particular at least two colour compositions and/or extender compositions, particularly preferably at least three aqueous compositions, in particular at least three colour compositions and/or extender compositions, containing or consisting of at least one preservative which decomposes under alkaline conditions,
at least one pigment and/or at least one filler,
at least one wetting and/or dispersing agent and
optionally at least one first additive,
and
B') at least one, in particular precisely one, alkaline tinting base composition (also denoted second tinting base composition), consisting of or containing at least one binder and
optionally at least one solvent and
optionally at least one second additive,
or comprising
A") at least one aqueous composition, in particular colour composition or extender composition, preferably at least two aqueous compositions, in particular at least two colour compositions and/or extender compositions, particularly preferably at least three aqueous compositions, in particular at least three colour compositions and/or extender compositions, containing or consisting of at least one preservative which decomposes in the presence of at least one reducing agent, in particular cysteine, thiosulfates and/or sulfites,
at least one pigment and/or at least one filler,
at least one wetting and/or dispersing agent and
optionally at least one first additive,
and
B") at least one, in particular precisely one, optionally alkaline tinting base composition (also denoted third tinting base composition), consisting of or containing
at least one binder,
at least one reducing agent, in particular cysteine, thiosulfates and/or sulfites, and
optionally at least one solvent and
optionally at least one second additive.

12. Tinting system according to claim 11, **characterized in that**
the at least one preservative which decomposes under alkaline conditions decomposes at a pH-value greater than or equal to 9.0, preferably greater than or equal to 10.0, and/or
the at least one tinting base composition according to B' (second tinting base composition) has a pH-value greater than or equal to 9.0, preferably greater than or equal to 10.0, and/or
the at least one aqueous composition, in particular colour composition or extender composition, according to A' has a pH-value less than or equal to 9, preferably less than or equal to 8.5, and particularly preferably less than or equal to 8.0.

13. Tinting system according to claim 11 or 12, **characterized in that** the at least one preservative which decomposes under alkaline conditions decomposes under alkaline conditions, in particular at a pH-value greater than or equal to 9.0, with a half-life less than 25 days, preferably less than or equal to 5 days and particularly preferably less than or equal to 3 days.

14. Tinting system according to any one of claims 11 to 13, **characterized in that** the preservative which decomposes under alkaline conditions and/or in the presence of at least one reducing agent, in particular cysteine, thiosulfates and/or sulfites, comprising or consisting of isothiazolinones, in particular selected from the group consisting of 2-methyl-isothiazolin-3-one (MIT), 5-chloro-2-methyl-4-isothiazolin-3-one (CIT) and any mixtures thereof, in particular 5-chloro-2-methyl-4-isothiazolin-3-one (CIT).

15. Tinting system according to any one of claims 11 to 14, **characterized in that** in addition to the at least one preservative which decomposes under alkaline conditions and/or in the presence of at least one reducing agent, in particular cysteine, thiosulfates and/or sulfites, it contains no further preservatives.

16. A tinting system according to one of Claims 10 to 15, **characterized in that** the aqueous composition, in particular colour composition or extender composition, is or comprises a tinting and/or lightening paste.

17. A tinting system according to Claim 10 to 16, **characterized in that** the, in particular preservative-free, base tinting composition is an aqueous low-pigment finish, a water lacquer, a solvent-containing low-pigment finish, a solvent-based lacquer, a dispersion paint, a limewash, a silicate paint, a silicone resin paint, a silicate dispersion paint, a lightweight plaster, a floor coating, a plaster, in particular a silicone plaster or a silicate plaster, or is the base formulation therefor.

18. The tinting system according to one of Claims 10 to 17 or the aqueous composition according to Claim 8, **characterized in that**
the binding agent of the base tinting composition or of the aqueous composition, in particular of the colour composition, comprises or is an organic binding agent in the form of an aqueous dispersion based on polymers containing acrylates, vinyl acetate and/or styrene, in particular based on pure acrylates and/or terpolymers, or an inorganic binding agent based on water glass and/or silica sol, or a hybrid binding agent, in particular an aqueous organosilicate hybrid dispersion and/or **in that** the binding agent is based on an acrylic resin, acrylic silicone resin, silicone resin, urethane resin, unsaturated polyester resin or alkyd resin or comprises or is such a compound.

19. Use of the tinting system according to one of Claims 10 to 18 for the manufacture of, in particular preservative-free, tinted coating or plastering systems, in particular of tinted aqueous low-pigment finishes, water lacquers, solvent-containing low-pigment finishes, solvent-based lacquers, paints, in particular dispersion paints, particularly preferably exterior dispersion paints, limewashes, silicate paints, silicone resin paints, silicate dispersion paints, sol-silicate paints and/or nano-hybrid paints, in particular based on an aqueous organosilicate hybrid dispersion, floor coatings or plasters, in particular silicone resin plasters, silicate plasters, sol-silicate plasters, lightweight plasters, organosilicate hybrid dispersion plasters and/or synthetic resin plasters.

20. Tinted coating or plaster system, in particular preservative-free coating or plaster system, obtained or obtainable from the tinting system according to claim 10 or according to one or more of claims 16 to 18, if directly or indirectly referring back to claim 10, by mixing the composition A) with a tinting base composition B) or obtainable from the tinting system according to one or more of claims 11 to 15 or 16 to 18, if the latter are directly or indirectly referring back to claim 11, by mixing the composition A') with a tinting base composition B') or by mixing the composition A") with a tinting base composition B").

21. The coating or plastering system according to Claim 20, **characterized in that** it comprises or is a tinted aqueous low-pigment finish, a water lacquer, a solvent-containing low-pigment finish, a solvent-based lacquer, a paint, in particular a dispersion paint, particularly preferably an exterior dispersion paint, a silicate dispersion paint, a limewash, a silicate paint, a silicone resin paint, a sol-silicate paint and/or nano-hybrid paint, in particular based on an aqueous organosilicate hybrid dispersion, a floor coating or a plaster, in particular a silicone resin plaster, a lightweight plaster, a sol-silicate plaster, an organosilicate hybrid dispersion plaster and, a synthetic resin plaster and/or a silicate plaster.

22. The coating or plastering system according to Claim 20 or 21, **characterized in that** it has a VOC content of less than 10 g/liter, preferably of less than 1 g/liter.

23. A coating or plastering obtained or obtainable by application of the tinted coating or plastering system according to one of Claims 20 to 22 onto a substrate surface.

24. A method for tinting an aqueous composition, in particular colour composition or extender composition, comprising the steps of
i) providing at least one aqueous composition, in particular colour composition or extender composition, preferably at least two and particularly preferably at least three aqueous compositions, in particular colour compositions and/or extender compositions, according to one or more of Claims 1 to 9,
ii) providing the at least one base tinting composition (first base tinting composition) according to Claim 10, or according to one or more of claims 16 to 18, if directly or indirectly referring back to claim 10, and
iii) mixing the colour composition according to i) and the base tinting composition according to ii) to obtain a tinted coating or plastering system, in particular according to one of Claims 20 to 22; or
i') providing at least one aqueous composition, in particular colour composition or extender composition, preferably at least two and particularly preferably at least three aqueous compositions, in particular colour compositions and/or extender compositions, in particular according to one or more of Claims 1 to 9,
ii') providing the at least one second tinting base composition according to any one of claims 11 to 15 or 16 to 18, if the latter are directly or indirectly referring back to claim 11, and
iii') mixing the colour composition according to i') and the second tinting base composition according to ii') to obtain a tinted coating or plaster system, in particular according to any one of claims 20 to 22; or
i") providing at least one aqueous composition, in particular colour composition or extender composition, preferably at least two and particularly preferably at least three aqueous compositions, in particular colour compositions and/or extender compositions, in particular according to one or more of claims 1 to 9,
ii") providing the at least one third tinting base composition according to any one of claims 11 to 15 or 16 to 18, if the latter are directly or indirectly referring back to claim 11, and
iii") mixing the colour composition according to i") and the third tinting base composition according to ii") to obtain a tinted coating or plaster system, in particular according to any one of claims 20 to 22.

## Revendications

1. Composition aqueuse, en particulier composition de nuance de couleur ou composition de diluant pour un système à teinter, contenant ou se composant de
a) au moins un pigment et/ou au moins une charge,
b) au moins un agent mouillant et/ou un agent dispersant,
c) au moins un humectant, en particulier des polyalkylène glycols, et/ou au moins une cire, en particulier ajoutée sous la forme d'une émulsion de cire aqueuse,
d) au moins un alkylalkoxysilane, alkylalkoxysiloxane, alkylsiliconate soluble dans l'eau, en particulier méthylsiliconate de potassium, monoalkylsilanetriol, dialkylsilanediol, trialkylsilanol, sel alcalin de monoalkylsilanetriol, en particulier méthylsilanetriolate de potassium et/ou éthylsilanetriolate de potassium, dialkylsilanediol, trialkylsilanol ou des mélanges quelconques de ceux-ci
e) composés d'amines, et
f) le cas échéant, au moins un premier additif,
la composition aqueuse, en particulier la composition de nuance de couleur présentant une valeur pH supérieure ou égale à 9,0, de préférence dans la plage de 10,0 à 12,0 et en particulier de préférence dans la plage de 10,5 à 11,5, ou est fixée sur une valeur pH supérieure ou égale à 9,0, de préférence dans la plage de 10,0 à 12,0, et en particulier de préférence dans la plage de 10,5 à 11,5.

2. Composition selon la revendication 1, **caractérisée en ce que** l'au moins un additif est sélectionné parmi le groupe se composant d'antimoussants, stabilisants, agents ignifuges, agents rendant hydrophobe, agents matants, en particulier acide silicique de précipitation, additifs rhéologiques, en particulier épaississants, phyllosilicates, phyllosilicates modifiés organiquement et/ou résines alkydes thixotropes, additifs de surface, en particulier additifs de surface de silicone, par exemple polyméthylalkylsiloxane à modification polyéther et/ou copolymére de polyéther de silicone, substances tampons, agents neutralisants, régulateurs de pH, absorbeurs UV, fixateurs de radicaux et mélanges de ces composés, et comprend en particulier au moins un épaississant et/ou au moins un antimoussant.

3. Composition selon la revendication 2, **caractérisée en ce que** l'épaississant est sélectionné parmi le groupe se composant d'épaississants polyacrylates, d'épaississants polyuréthanes, d'épaississants polyurées, d'épaississants de cellulose, en particulier à base d'hydroxyéthylcellulose et/ou de méthylcellulose, d'épaississants polyvinylalcools, d'épaississants polyétherpolyols, d'épaississants de phyllosilicates, d'épaississants polysaccharides, en particulier de xanthane, et de mélanges quelconques de ceux-ci.

4. Composition selon l'une quelconque des revendications précédentes, **caractérisée en ce que**
l'au moins un agent mouillant et/ou agent dispersant est sélectionné parmi le groupe se composant de polycarboxylates, en particulier de sels d'acides polyacryliques, polyphosphates, en particulier polyphosphates linéaires et/ou métaphosphates cycliques, polyétherphosphates, polymères d'acide polycarboxylique, copolymères à blocs acryliques, en particulier copolymères à blocs acryliques à base de CFRP, alcools gras éthoxylés, alcools non-ioniques saturés à longue chaîne, sulfates d'alcools gras, alkylphosphonate, polysiloxanéthers, en particulier méthoxypolyéthoxypropyltrisiloxane, alcynediol-éthoxylates, tensioactifs fluorés et mélanges quelconques de ceux-ci, et comprend en particulier des polyétherphosphates, des sels de potassium de polymères d'acides polycarboxyliques, des copolymères à blocs acryliques à base de CFRP, des alcools gras éthoxylés et/ou des alcools non-ioniques saturés à longue chaîne.

5. Composition selon l'une quelconque des revendications précédentes, **caractérisée en ce qu'**elle est essentiellement exempte de conservateurs, de préférence exempte de conservateurs biocides organiques, de manière particulièrement préférée exempte de conservateurs de pots et/ou de films.

6. Composition selon l'une quelconque des revendications précédentes, comprenant en outre du verre soluble, sélectionné parmi le groupe se composant de verre soluble de sodium, verre soluble de potassium, verre soluble de lithium et de mélanges de ceux-ci, et/ou de sol de silice.

7. Composition selon l'une quelconque des revendications précédentes, contenant
a) au moins un pigment et/ou au moins une charge,
b) au moins un agent mouillant et/ou un agent dispersant,
c) au moins un humectant, en particulier des polyalkylène glycols, et/ou au moins une cire,
d) au moins un alkyl siliconate soluble dans l'eau, en particulier du méthyl siliconate de potassium,
f) au moins un épaississant, en particulier un épaississant polysaccharide et/ou un épaississant phyllosilicate, en particulier des phyllosilicates modifiés organiquement, et au moins un antimoussant.

8. Composition aqueuse selon l'une quelconque des revendications précédentes, comprenant en outre au moins un liant.

9. Composition selon l'une quelconque des revendications précédentes, contenant de 2 à 80 % massique, de préférence de 5 à 75 % massique, et en particulier de préférence de 10 à 70 % massique du composant a),
de 0,2 à 20 % massique, de préférence de 1 à 18 % massique, et en particulier de préférence de 2 à 15 % massique du composant b),
de 0,1 à 20 % massique, de préférence de 0,5 à 10 % massique, et en particulier de préférence de 1,0 à 6,0 % massique du composant c),
de 0,01 à 5,0 % massique, de préférence de 0,1 à 2 % massique, et en particulier de préférence de 0,2 à 1 % massique du composant d) et/ou, en particulier et,
de 0,001 à 5 % massique, de préférence de 0,01 à 3,5 % massique et en particulier de préférence de 0,1 à 2,5 % massique du composant f), en particulier d'épaississant et/ou d'antimoussant, les parts des composants formant la composition représentant des substances solides ou, pour autant que non présentes sous la forme de substances solides à 20 °C, les parts de substances actives non-aqueuses et la quantité des composants formant la composition étant toujours sélectionnée de telle sorte que la somme de 100,0 % massique en résulte.

10. Kit de pièces système à teinter pour l'ajustement de couleur de systèmes de peinture et d'enduit (également nommé premier système à teinter), comprenant
A) au moins une composition aqueuse, en particulier une composition de nuance de couleur ou une composition de diluant, de préférence au moins deux compositions aqueuses, en particulier au moins deux compositions de nuances de couleur et/ou deux compositions de diluant, en particulier de préférence au moins trois compositions aqueuses, en particulier au moins trois compositions de nuances de couleur et/ou compositions de diluant, selon l'une quelconque des revendications précédentes, et
B) au moins une, en particulier exactement une, composition à teinter de base (également nommée première composition à teinter de base), se composant de ou comprenant
au moins un liant ainsi que,
le cas échéant, au moins un solvant et
le cas échéant, au moins un deuxième additif.

11. Kit de pièces système à teinter pour l'ajustement de couleur de systèmes de peinture et d'enduit (également appelé deuxième système de teinture), comprenant
A') au moins une composition aqueuse, en particulier une composition de nuance de couleur ou une composition de diluant, de préférence au moins deux compositions aqueuses, en particulier au moins deux compositions de nuances de couleur et/ou deux compositions de diluant, de manière particulièrement préférée au moins trois compositions aqueuses, en particulier au moins trois compositions de nuances de couleur et/ou compositions de diluant, contenant ou se composant de
au moins un conservateur qui se décompose dans des conditions alcalines, au moins un pigment et/ou au moins une charge,
au moins un agent mouillant et/ou dispersant et
le cas échéant au moins un premier additif,
et
B') au moins une, en particulier exactement une, une composition de nuance de couleur alcaline (également appelée deuxième une composition de nuance de couleur ), se composant de ou contenant
au moins un liant ainsi que
le cas échéant au moins un solvant et
le cas échéant au moins un deuxième additif,
ou comprenant
A") au moins une composition aqueuse, en particulier une composition de nuance de couleur ou une composition de diluant, de préférence au moins deux compositions aqueuses, en particulier au moins deux compositions de nuances de couleur et/ou deux compositions de diluant, de manière particulièrement préférée au moins trois compositions aqueuses, en particulier au moins trois compositions de nuances de couleur et/ou compositions de diluant, contenant ou se composant de
au moins un conservateur qui se décompose en présence d'au moins un agent réducteur, en particulier de la cystéine, des thiosulfates et/ou des sulfites,
au moins un pigment et/ou au moins une charge,
au moins un agent mouillant et/ou dispersant et
le cas échéant au moins un premier additif,
et
B") au moins une, en particulier exactement une, une composition de nuance de couleur le cas échéant alcaline (également appelée troisième une composition de nuance de couleur), se composant de ou contenant au moins un liant,
au moins un agent réducteur, en particulier de la cystéine, des thiosulfates et/ou des sulfites, ainsi que
le cas échéant au moins un solvant et
le cas échéant au moins un deuxième additif.

12. Système à teinter selon la revendication 11, **caractérisé en ce que**
l'au moins un conservateur qui se décompose dans des conditions alcalines se décompose à un pH supérieur ou égal à 9,0, de préférence supérieur ou égal à 10,0 et/ou
**en ce que** l'au moins une composition de nuance de couleur selon B' (deuxième une composition de nuance de couleur) présente un pH supérieur ou égal à 9,0, de préférence supérieur ou égal à 10,0 et/ou
l'au moins une composition aqueuse, en particulier une composition de nuance de couleur ou une composition de diluant, selon A' présente un pH inférieur ou égal à 9, de préférence inférieur ou égal à 8,5, et de manière particulièrement préférée inférieur ou égal à 8,0.

13. Système à teinter selon la revendication 11 ou 12, **caractérisé en ce que** l'au moins un conservateur qui se décompose dans des conditions alcalines se décompose dans des conditions alcalines, en particulier à un pH supérieur ou égal à 9,0, avec une demi-vie inférieure à 25 jours, de préférence inférieure ou égale à 5 jours et de manière particulièrement préférée inférieure ou égale à 3 jours.

14. Système à teinter selon l'une quelconque des revendications 11 à 13, **caractérisé en ce que**
le conservateur qui se décompose dans des conditions alcalines et/ou en présence d'au moins un agent réducteur, en particulier de la cystéine, des thiosulfates et/ou
des sulfites, comprend ou se compose d'isothiazolinones, en particulier choisies dans le groupe constitué par la 2-méthyl-isothiazolin-3-one (MIT), la 5-chloro-2-méthyl-4-isothiazolin-3-one (CIT) et leurs mélanges quelconques, en particulier la 5-chloro-2-méthyl-4-isothiazolin-3-one (CIT).

15. Système à teinter selon l'une quelconque des revendications 11 à 14, **caractérisé en ce que**
celui-ci ne contient pas d'autres conservateurs en plus de l'au moins un conservateur qui se décompose dans des conditions alcalines et/ou en présence d'au moins un agent réducteur, en particulier de la cystéine, des thiosulfates et/ou des sulfites.

16. Système à teinter selon l'une des revendications 10 à 15, **caractérisé en ce que** la composition aqueuse, en particulier la composition de nuance de couleur ou la composition de diluant représente ou comprend une pâte teintante et/ou éclaircissante.

17. Système à teinter selon l'une des revendications 10 à 16, **caractérisé en ce que** la composition à teinter de base en particulier sans agents de conservation représente une lasure aqueuse, une peinture à l'eau, une lasure contenant un solvant, une peinture à solvant, une peinture à dispersion, une peinture à la chaux, une peinture au silicate, une peinture à la résine de silicone, une peinture au silicate de dispersion, un enduit léger, un revêtement de sol, un enduit, en particulier un enduit de silicone ou un enduit de silicate, ou est la recette pour ceux-ci.

18. Système à teinter selon l'une des revendications 10 à 17 ou composition aqueuse selon la revendication 8, caractérisé(e) en ce que
le liant de la composition à teinter de base ou de la composition aqueuse, en particulier de la composition de nuance de couleur, contient ou représente un liant organique sous la forme d'une dispersion aqueuse à base de polymères contenant des acrylates, de l'acétate de vinyle et/ou du styrène, en particulier à base d'acrylates purs et/ou de terpolymères, ou un liant anorganique à base de verre soluble et/ou de sol de silice, ou un liant hybride, en particulier une dispersion hybride organosilicate aqueuse, et/ou en ce que le liant est basé sur une résine acrylique, une résine de silicone acrylique, une résine de silicone, une résine uréthane, une résine polyester insaturée ou une résine alkyde, ou comprend ou représente un tel composé.

19. Utilisation du système à teinter selon l'une ou plusieurs des revendications 10 à 18 pour la fabrication de systèmes de peinture ou d'enduit teintés, en particulier sans agents de conservation, en particulier de lasures aqueuses, peintures à l'eau, lasures à base de solvants, peintures aux solvants, peintures, en particulier peintures à dispersion, en particulier de préférence peintures extérieures à dispersion, peintures à la chaux, peintures au silicate, peintures à la résine de silicone, peintures au silicate de dispersion, peintures sol-silicate et/ou peintures nano-hybrides, en particulier à base d'une dispersion hybride organosilicate aqueuse, revêtements de sol ou enduits, en particulier enduits de résine de silicone, enduits au silicate, enduits sol-silicate, enduits légers, enduits à dispersion hybride organosilicate et/ou enduits de résine synthétique teinté(e)s.

20. Système de peinture ou d'enduit teinté, en particulier système de peinture ou d'enduit sans conservateur, obtenu ou pouvant être obtenu à partir du système à teinter selon la revendication 10 ou selon l'une ou plusieurs des revendications 16 à 18, dans la mesure où elles font directement ou indirectement référence à la revendication 10, par mélange de la composition A) avec une composition de base à teinter B) ou pouvant être obtenu à partir du système à teinter selon l'une ou plusieurs des revendications 11 à 15 ou 16 à 18, dans la mesure où ces dernières font directement ou indirectement référence à la revendication 11, par mélange de la composition A') avec une composition de base à teinter B') ou par mélange de la composition A") avec une composition de base à teinter B").

21. Système d'enduit ou de peinture selon la revendication 20, **caractérisé en ce que** cette composition de base comprend ou représente une lasure aqueuse, une peinture à l'eau, une lasure contenant un solvant, une peinture à solvant, une peinture, en particulier une peinture à dispersion, en particulier de préférence une peinture extérieure à dispersion, une peinture au silicate de dispersion, une peinture à la chaux, une peinture au silicate, une peinture à la résine de silicone, une peinture sol-silicate et/ou une peinture nano-hybride, en particulier à base d'une dispersion hybride organosilicate aqueuse, un revêtement de sol ou un enduit, en particulier un enduit de résine de silicone, un enduit léger, un enduit sol-silicate, un enduit à dispersion hybride organosilicate et un enduit de résine synthétique et/ou un enduit de silicate.

22. Système d'enduit ou de peinture selon la revendication 20 ou 21, **caractérisé en ce que** celui-ci présente une teneur en VOC inférieure à 10 g/l, de préférence inférieure à 1 g/l.

23. Peinture ou enduit, obtenu(e) ou pouvant être obtenu(e) par application du système d'enduit ou de peinture selon l'une des revendications 20 à 22 sur une surface de substrat.

24. Procédé pour teinter une composition aqueuse, en particulier une composition de nuance de couleur ou une composition de diluant, comprenant les étapes
i) mise à disposition d'au moins une composition aqueuse, en particulier une composition de nuance de couleur ou une composition de diluant, de préférence au moins deux compositions aqueuses, et en particulier de préférence au moins trois compositions aqueuses, en particulier des compositions de nuances de couleur et/ou compositions de diluant, selon l'une ou plusieurs des revendications 1 à 9,
ii) mise à disposition de l'au moins une composition à teinter de base (première composition à teinter de base) selon la revendication 10, ou selon l'une ou plusieurs des revendications précédentes 16 à 18, dans la mesure où elles font directement ou indirectement référence à la revendication 10, et
iii) mélange de la composition à teinter de base selon i) et de la composition de nuance de couleur de base selon ii) avec obtention d'un système d'enduit ou de peinture teinté, en particulier selon l'une des revendications 20 à 22 ; ou
i') mise à disposition d'au moins une composition aqueuse, en particulier une composition de nuance de couleur ou une composition de diluant, de préférence au moins deux et en particulier de préférence d'au moins trois compositions aqueuses, en particulier des compositions de nuances de couleur et/ou des compositions de diluant, en particulier selon l'une ou plusieurs des revendications 1 à 9,
ii') mise à disposition de l'au moins une deuxième composition de base à teinter selon l'une quelconque des revendications 11 à 15 ou 16 à 18, dans la mesure où ces dernières font directement ou indirectement référence à la revendication 11, et
iii') mélange de la composition de la teinte selon i') et de la deuxième composition de base à teinter selon ii') avec obtention d'un système de peinture ou d'enduit teinté, en particulier selon l'une quelconque des revendications 20 à 22 ; ou
i") mise à disposition d'au moins une composition aqueuse, en particulier une composition de nuance de couleur ou une composition de diluant, de préférence d'au moins deux et de manière particulièrement préférée d'au moins trois compositions aqueuses, en particulier des compositions de nuances de couleur et/ou des compositions de diluant, en particulier selon une ou plusieurs des revendications 1 à 9,
ii") mise à disposition de l'au moins une troisième composition de base à teinter selon l'une quelconque des revendications 11 à 15 ou 16 à 18, dans la mesure où ces dernières font directement ou indirectement référence à la revendication 11, et
iii") mélange de la composition de la teinte selon i") et de la troisième composition de base à teinter selon ii") avec obtention d'un système de peinture ou d'enduit teinté, en particulier selon l'une quelconque des revendications 20 à 22.
